# EUROPEAN PATENT APPLICATION

(11) **EP 1 820 597 A2**
(43) Date of publication of application: **22.08.2007**
(21) Application number: 07101750.3
(22) Date of filing: 05.02.2007
(51) Int. Cl.: B23K 15/00, B23K 33/00, F01D 5/02, B23K 101/00

(54) **Methods and apparatus for welding turbine engine rotors**

(30) Priority: 15.02.2006 US 354514
(71) Applicant: General Electric Company, Schenectady, NY 12345 (US)
(72) Inventor: THAMBOO, Samuel V., Latham, NY 12110 (US); SPIEGEL, Lvie B., Niskayuna, NY 12309 (US); YEHLE, Gary E., Clifton Park, NY 12065 (US); BURNETT, Mark E., Barton, NY 13734 (US)
(74) Representative: Bedford, Grant Richard

(57) **Abstract**

A method for welding two sections of a rotor (100) together, wherein each rotor section includes a welding surface, is provided. The method includes positioning the welding surface (114) of the first rotor section (102) substantially flush against the welding surface (116) of the second rotor section (104). The method also includes positioning the second section substantially flush against a flange circumscribing the first section such that a rabbeted joint (125) is defined therebetween.

## Description

The present invention relates generally to turbine engines, and, more particularly to methods for welding turbine engine rotors.

At least some known turbine engine rotors include several rotor sections, wherein each rotor section may operate at a different temperature and/or at different operating conditions. For example, such rotors may include a high pressure rotor section, an intermediate pressure rotor section, and a low pressure rotor section. Because the different rotor sections are subjected to different operating temperatures and pressures, for example, within a rotor, at least some known rotor sections are fabricated with different materials. Known methods of coupling the different rotor sections include bolting and/or welding the sections together. Between the two coupling methods commonly employed, bolting the sections together is generally the least desirable because the flanges and bolts used generally result in the turbine rotor being longer than desired and increase the original weight of the rotor.

Known methods of welding rotor sections may subject the rotor to flaws if such welding processes require multiple passes, intermediate machining, and/or multiple heat treatments. In particular, multiple welding passes may increase risks of defects in the finished weld. For example, each pass may increase the risk for slag entrapment, lack of fusion, or porosity, which may serve as an initiation point for serious cracking.

To facilitate reducing risks associated with welding rotor sections together, at least one welding method uses a welding electrode to build up a layer on either side of the joint to be welded. However, this welding technique increases the width of the welding joint, which may increase the risk of slag entrapment and/or porosity. An alternative welding technique uses layered transition pieces fabricated from different composite materials. However, generally, such transition pieces have lower material strengths than other sections of the rotor. As a result, the rotor must be handled with special care to avoid damaging or weakening the transition pieces. Furthermore, the ends of such a rotor must be heat treated, which may subject the composite transition materials to excessive temperatures.

In one aspect according to the present invention, a method for welding two sections of a rotor together, wherein each rotor section includes a welding surface, is provided. The method includes positioning the welding surface of the first rotor section substantially flush against the welding surface of the second rotor section. The method also includes positioning the second section substantially flush against a flange circumscribing the first section such that a rabbeted joint is defined therebetween.

In another aspect, a rotor for a turbine engine is provided. The rotor includes a first rotor section including a welding surface and a flange. The rotor also includes a second rotor section including a welding surface. The first rotor welding surface is positioned substantially flush against the second rotor welding surface and the second rotor section is substantially flush against the flange such that a rabbeted joint is defined between the first rotor section and the second rotor section.

In a further aspect, a system for welding two sections of a rotor is provided. Both sections of the rotor include a welding surface. The first rotor section welding surface is positioned substantially flush against the second rotor section welding surface, and the second rotor section is substantially flush against a flange circumscribing the first rotor section such that a rabbeted joint is defined therebetween. The system includes a casing coupled to the rotor such that a chamber, defined by the casing, substantially circumscribes the joint. The chamber is vacuum pumped to create a vacuum therein or a partial vacuum. The system also includes an electron beam generator to weld the joint within the chamber.

Various aspects and embodiments of the present invention will now be described in connection with the accompanying drawings, in which:
Figure 1 is an exemplary view of a turbine rotor including at least two sections to be welded;
Figure 2 is a view of an exemplary welding joint that may be used in coupling the sections of the rotor shown in Figure 1;
Figure 3 is a sectional view of an exemplary weld joint showing how the electron beam energy is profiled towards the end of the weld cycle; and
Figure 4 is a view of a portion of the joint shown in Figure 2, and including a shim inserted between the sections of the joint welded together.

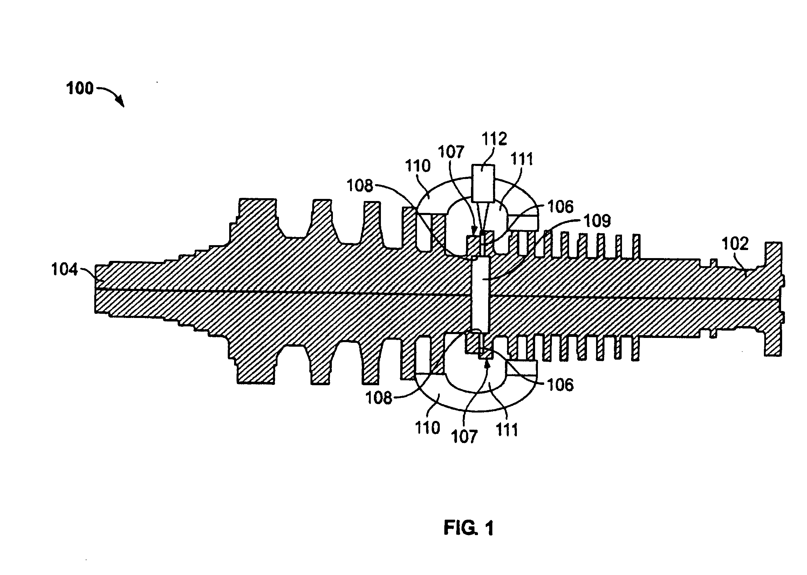

Figure 1 is an exemplary view of a turbine rotor 100 including at least two rotor sections to be welded. Specifically, rotor 100 includes a first rotor section 102 and a second rotor section 104 to be coupled together at a weld joint 106. Joint 106 includes a radially outer portion 107 and a radially inner portion 108 that is radially inward from joint outer portion 107. A cavity 109 is defined within joint 106 between rotor sections 102 and 104. A casing 110 is coupled to rotor 100 such that casing 110 defines a chamber 111 circumscribing joint 106 and extending circumferentially about rotor 100. Any air in chamber 111 is removed using a vacuum pump, such that a vacuum is induced within chamber 111. A reduced pressure electron beam generator 112 is then coupled to casing 110, within chamber 111, and is aligned such that it can direct an electron beam towards joint outer portion 107 to facilitate welding rotor sections 102 and 104.

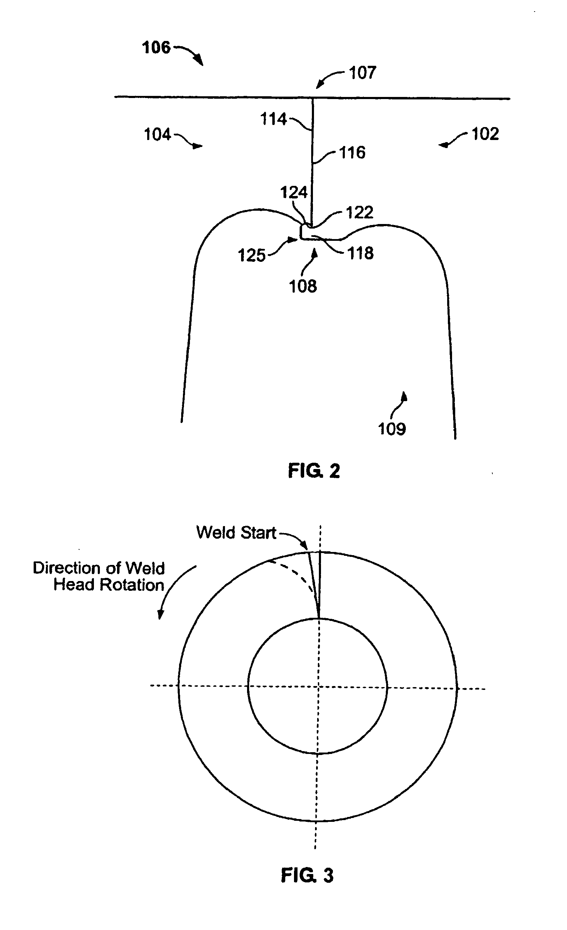

Figure 2 is a view of an exemplary welding joint 106 that may be used in welding rotor sections 102 and 104. Joint 106 is formed with a first section surface 114, and is aligned and pressed into contact substantially flush against a second section surface 116. A rabbet 118 extends outward along a first section inner surface 120, and in the exemplary embodiment, is substantially perpendicular to first section surface 114. Rabbet 118 includes a radially upper surface 124 that is substantially parallel to first section inner surface 120 and is substantially perpendicular to first section surface 114. A second section inner surface 122 is substantially flush against rabbet upper surface 124 such that a rabbeted joint 125 is defined along joint inner portion 108.

Prior to beginning a welding operation, rotor sections 102 and 104 are positioned together to define joint 106. Specifically, second section surface 116 is positioned substantially flush against first section surface 114, and second section inner surface 122 is positioned substantially flush against rabbet upper surface 124 to define rabbeted joint 125. Rabbeted joint 125 facilitates coupling section 102 and section 104. The coupling of section 102 and section 104 also defines cavity 109. Alternatively, rotor 100 may include several joints 106 defined by multiple sections.

Casing 110 is coupled to rotor 100 such that casing 110 defines chamber 111 substantially circumscribing joint 106. The air is removed from the chamber 111 to create a vacuum surrounding joint 106. Because chamber 111 circumscribes a limited section of rotor 100, the need for large vacuum housings is eliminated.

After a vacuum is established within chamber 111, the welding process is performed. Specifically, in the exemplary embodiment, the welding is performed by electron beam generator 112. Electron beam generator 112 is coupled to casing 110, within chamber 111, such that it can be moved circumferentially around rotor 100. Electron beam generator 112 is aligned relative to joint 106 to enable an electron beam to be directed towards joint outer portion 107 with an intensity that enables it to penetrate to joint inner portion 108.

Electron beam generator 112 is rotated around the circumference of rotor 100 while directing the electron beam at joint outer portion 107. Alternatively the electron beam is kept stationary and the rotor is rotated to create a relative travel between the beam and the rotor circumference. During the rotation, the electron beam heats first section surface 114 and second section surface 116 to produce welded metal. Welded metal from surface 114 is fused with welded metal from surface 116 such that section 102 and section 104 are bonded into a unitary piece. Because electron beam generator 112 need only make one complete rotation around the circumference of joint 106 to bond surfaces 114 and 116, welding defects are facilitated to be reduced in comparison to welding techniques that require multiple passes. Specifically, because rabbeted joint 125 facilitates a tighter fit between sections 102 and 104, the electron beam is able to produce a more structurally sound weld with only one pass of electron beam generator 112. As a result, a structurally strong weld that is less susceptible to weld defects and distortion, is produced.

During the welding process, rabbet 118 prevents materials, including welded metal and/or slag, from falling into cavity 109 such that fusing between the welded metal of surface 114 and the welded metal of surface 116 is facilitated to be optimized. As such, the bond provided between section 102 and section 104 is structurally sound, and brittleness and cracking within the weld is facilitated to be reduced. Moreover, by preventing welded metal from falling into cavity 109, a more complete bond can be obtained between sections 102 and 104, resulting in fewer defects.

In the exemplary embodiment, electron beam generator 112 is operable through a range of powers indicative of the intensity of the electron beam. Because joint outer portion 107 has a greater circumference than joint inner portion 108, the inner portion will be welded 360 degrees before the outer portion is completed as shown in Figure 3. The power of the electron beam must be reduced as electron beam generator 112 completes the welding of the inner portion. This is done to facilitate a gradual change in the weld penetration depth to the surface. This prevents weld defects like porosity or voids which would be seen if the full beam intensity were suddenly shutdown on completion of the outer portion of the weld.

After completion of the weld a stress relieving heat treat process is applied locally to the area near the joint. This is needed because of two reasons. The first reason is that any weld process will leave some residual stresses at the joint. The second reason is that most materials will undergo metallurgical transformation in the heat affected zone of the weld which may change their mechanical properties. The selection of temperature for this heat treatment is based on the materials being welded. After the heat treat process the materials properties at the joint are mostly restored close to the original base material properties.

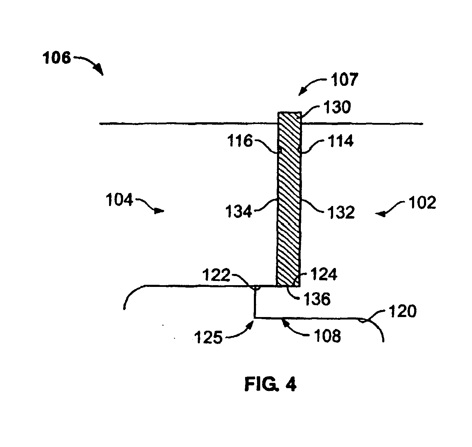

Figure 4 is an enlarged view of a portion of joint 106 including a shim 130 inserted between welding sections 102 and 104. In the exemplary embodiment, first section 102 and second section 104 are fabricated from different materials, which, because of their material properties, cannot be welded directly against each other without increasing the potential of brittleness or cracking developing in joint 106. Shim 130 is inserted between first section 102 and second section 104 to facilitate proper fusing of the two materials during welding. Specifically, when shim 130 is positioned between sections 102 and 104, a shim first surface 132 is substantially flush against first section surface 114, and an opposite shim second surface 134 is substantially flush against second section surface 116. Furthermore, when shim 130 is inserted between sections 102 and 104, a shim inner surface 136 is substantially flush against rabbet upper surface 124. Shim 130 has a width 138 that is sized to enable second section inner surface 122 to be positioned substantially flush against rabbet upper surface 124.

The material used in fabricating shim 130 is selected based on the materials used in fabricating first section 102 and second section 104. For example, if CrMoV steel were being welded to NiCrMoV steel, a shim fabricated of an intermediate composition of the two steel alloys could be used. Moreover, and for example, if steel materials are being coupled to nickel-based alloys, an alloy such as alloy 625 or alloy 617 could be used. In each embodiment, the shim material of the appropriate thickness is selected to facilitate preventing potentially harmful phases from forming in the weld, while maintaining the properties of the weld metal. In the exemplary embodiment, a similar process to the above-described welding process and heat treat process is utilized when shim 130 is inserted between section 102 and section 104.

Prior to beginning welding operations, rotor sections 102 and 104 and shim 130 are positioned together to define joint 106. Specifically, shim first surface 132 is positioned substantially flush against first section surface 114 and shim second surface 134 is positioned substantially flush against second section surface 116. Furthermore, shim inner surface 136 is positioned substantially flush against rabbet upper surface 124. Shim width 138 is sized such that second section inner surface 122 is positioned substantially flush against rabbet upper surface 124. The coupling of sections 102 and 104 with shim 130 also defines cavity 109. Alternatively, rotor 100 may include several joints 106 defined by multiple sections and multiple shims.

Casing 110 is coupled to rotor 100 such that chamber 111 substantially circumscribes joint 106. The air is removed from the chamber 111 to create a vacuum surrounding joint 106. Because chamber 111 circumscribes a limited section of rotor 100, the need for large vacuum housings is eliminated. After a vacuum is established within chamber 111, the welding process is performed with electron beam generator 112 coupled to casing 110, within chamber 111.

During the rotation of electron beam generator 112 around rotor 100, the electron beam heats surface 114 and surface 116 to produce welded metal. Furthermore, shim 130 is melted by the electron beam. Melted shim 130 fuses with the rotor metal on either side to bond section 102 and section 104 into a unitary piece. In the exemplary embodiment electron beam generator 112 completes one rotation around the circumference of joint 106. Moreover, the intensity of electron beam generator 112 is reduced as the rotation nears completion.

After completion of the weld a stress relieving heat treat process is applied locally to the area near the joint. This is needed relieve residual stresses at the joint and to restore the material properties of the metal. The selection of temperature for this heat treatment is based on the materials being welded. After the heat treat process the material properties at the joint are mostly restored close to the original base material properties.

The above-described methods and systems facilitate a turbine rotor being efficiently welded with a weld joint that is subject to less brittleness and/or cracking within the joint. Specifically, the rabbeted joint facilitates coupling the rotor sections together, such that they can be welded using only a single pass of an electron beam generator. As such, two sections of the rotor are welded using a technique which facilitates reducing defects, such as slag entrapment or porosity, within the weld. Furthermore, the methods and system described herein can be used to weld two rotor sections fabricated from different materials. The shim described herein enables at least two rotor sections being properly bonded together despite each having different material properties. Moreover, the shim does not effect the need for only one pass of the electron beam generator. As a result, rotor sections can be welded together with a structurally sound joint that is cost effective and reliable.

As used herein, an element or step recited in the singular and proceeded with the word "a" or "an" should be understood as not excluding plural said elements or steps, unless such exclusion is explicitly recited. Furthermore, references to "one embodiment" of the present invention are not intended to be interpreted as excluding the existence of additional embodiments that also incorporate the recited features.

Although the methods and systems described herein are described in the context of welding a turbine rotor, it is understood that the welding methods and systems described herein are not limited to turbine rotors. Likewise, the welding system components illustrated are not limited to the specific embodiments described herein, but rather, components of the welding system can be utilized independently and separately from other components described herein.

While the invention has been described in terms of various specific embodiments, those skilled in the art will recognize that the invention can be practiced with modification within the spirit and scope of the claims.

**PARTS LIST**

| | |
|---|---|
| 100 | turbine rotor |
| 102 | welding rotor sections |
| 104 | second rotor section |
| 106 | joint |
| 107 | joint outer portion |
| 108 | joint inner portion |
| 109 | cavity |
| 110 | casing |
| 111 | chamber |
| 112 | electron beam generator |
| 114 | first section surface |
| 116 | second section surface |
| 118 | rabbet |
| 120 | first section inner surface |
| 122 | second section inner surface |
| 124 | rabbet upper surface |
| 125 | rabbeted joint |
| 130 | shim |
| 132 | shim first surface |
| 134 | shim second surface |
| 136 | shim inner surface |
| 138 | width |

## Claims

1. A rotor (100) for a turbine engine, said rotor comprising:
a first rotor section (102) comprising a welding surface (114) and a flange;
a second rotor section (104) comprising a welding surface (116), said first rotor welding surface is positioned substantially flush against said second rotor welding surface such that a welding joint (106) is defined therebetween, said second rotor section is substantially flush against said flange such that a rabbeted joint (125) is defined therebetween, said rabbeted joint facilitates coupling said first rotor section and said second rotor section.

2. A rotor (100) in accordance with Claim 1 wherein a casing is coupled to said rotor such that a chamber (111) defined by the casing (110) substantially circumscribes said welding joint (106), said chamber configured to maintain a vacuum pressure therein, said welding joint configured to be welded with an electron beam generator (112) within said chamber.

3. A rotor (100) in accordance with Claim 2 wherein said welding joint (106) is configured to be welded by the electron beam generator (112) during a single rotation of the electron beam generator around said welding joint.

4. A rotor (100) in accordance with Claim 2 or Claim 3 further comprising a shim (130) inserted substantially flush between said first rotor section surface (114) and said second rotor section surface (116), said shim facilitates coupling said first rotor section and said second rotor section.

5. A rotor (100) in accordance with Claim 4 wherein said shim (130) comprises an alloy material.

6. A rotor (100) in accordance with any preceding Claim wherein a cavity (109) is defined between said first rotor section (102) and said second rotor section (104).

7. A system for welding two sections of a rotor (102, 104), wherein each rotor section includes a welding surface (114, 116), said system comprising:
a welding joint (106) defined between the first rotor section welding surface and the second rotor section welding surface;
a rabbeted joint (125) defined between the second rotor section and a flange circumscribing the first rotor section;
a casing (110) coupled to the rotor such that a chamber (111) defined by said casing (109) substantially circumscribes the welding joint, said chamber configured to maintain a vacuum pressure therein; and
an electron beam generator (112) configured to weld said welding joint within said chamber.

8. A system in accordance with Claim 7 wherein said electron beam generator (112) is configured to weld said welding joint (106) during a single rotation around said welding joint.

9. A system in accordance with Claim 7 or Claim 8 wherein an intensity of said electron beam generator (112) is adjustable to facilitate welding said welding joint (106).

10. A system in accordance with any one of Claims 7 to 9 wherein said welding joint (106) includes an inner portion (108), an intensity of said electron beam generator (112) is adjustable to facilitate welding said inner portion.
